Europäisches Patentamt

European Patent Office

Office européen des brevets

(19)

(11) Numéro de publication: **0 085 602**
**A2**

(12) # DEMANDE DE BREVET EUROPEEN

(21) Numéro de dépôt: **83400147.1**

(22) Date de dépôt: **21.01.83**

(51) Int. Cl.³: **B 32 B 17/10**
**C 03 C 27/12, B 32 B 31/00**
**B 29 C 5/08**

(30) Priorité: **21.01.82 DE 3201687**

(43) Date de publication de la demande:
**10.08.83 Bulletin 83/32**

(84) Etats contractants désignés:
**BE CH DE FR GB IT LI LU NL SE**

(71) Demandeur: **SAINT-GOBAIN VITRAGE**
**Les Miroirs 18, avenue d'Alsace**
**F-92400 Courbevoie(FR)**

(72) Inventeur: **Müller, Achim**
**Gierlichstrasse 14**
**Herzogenrath(DE)**

(72) Inventeur: **Pikhard, Siegfried**
**Hauptstrasse 137**
**Roetgen(DE)**

(72) Inventeur: **Leyens, Gerd, Dr.**
**Im Grüntal 20**
**Aachen(DE)**

(74) Mandataire: **Muller, René et al,**
**SAINT-GOBAIN RECHERCHE 39, quai Lucien Lefranc**
**F-93304 Aubervilliers(FR)**

(54) Feuille intercalaire en matière plastique, procédé de fabrication et application dans des vitrages feuilletés.

(57) Une feuille intercalaire pour la fabrication de vitrages feuilletés, comportant une couche d'un plastique très mou et au moins une chouche d'une matière plastique à résistance mécanique plus élevée. Cette couche plus résistante a de préférence des propriétés thermoplastiques et est une pellicule préfabriquée. Lorsque la couche (1) de la matière plastique très molle est unie des deux côtés à une couche thermoplastique (2, 3) plus résistante, la feuille intercalaire stratifiée ainsi obtenue peut être unie moyennant un apport de chaleur et de pression à deux feuilles de verre ou de matière plastique pour former un vitrage feuilleté. La couche faite de la matière plastique très molle est de préférence le produit de réaction d'un composant polyol polyfonctionnel et d'un composant isocyanate polyfonctionnel, un excès important du composant polyol étant prévu.

Fig. 1

Croydon Printing Company Ltd

FEUILLE INTERCALAIRE EN MATIERE PLASTIQUE,

PROCEDE DE FABRICATION ET APPLICATION DANS DES VITRAGES FEUILLETES

La présente invention concerne une feuille intercalaire pour un vitrage feuilleté en verre, en verre et en matière plastique ou en matière plastique. Elle comprend, en outre, un procédé pour la fabrication de telles feuilles intercalaires ainsi que leur application dans des vitrages feuilletés.

Pour des domaines d'application déterminés, on fabrique des vitrages feuilletés comportant des couches intercalaires très molles. Ces couches sont avantageuses, par exemple lorsqu'elles sont utilisées dans des vitrages insonorisants ou dans des vitrages pare-balles, ainsi que dans des vitrages anti-effraction, c'est-à-dire des vitrages résistant à une rupture, à un jet d'objet et à des explosions.

Pour fabriquer des vitrages comportant de telles couches intercalaires très molles, on procède habituellement de la manière suivante : on remplit l'espace intercalaire d'un double vitrage scellé hermétiquement au niveau de ses bords par un cadre d'entretoisement périphérique, avec un mélange réactionnel pouvant être coulé. En variante, on peut aussi verser le mélange réactionnel pouvant être coulé, une solution ou encore une masse fondue de la matière formant la couche intercalaire molle, sur une des feuilles de verre entrant dans la compostition du vitrage feuilleté, cette feuille de verre se trouvant en position horizontale. Lorsque la couche a réagi (ou muri) ou lorsqu'elle s'est suffisamment solidifiée après évaporation du solvant ou durcissement relatif de la matière fondue, la feuille de verre ainsi revêtue est unie à la deuxième feuille de verre ou de matière plastique du vitrage feuilleté. Des couches molles de ce type ainsi qu'un procédé pour fabriquer des vitrages feuilletés comportant de telles couches molles sont, par exemple, décrits dans la demande DE-OS 30 32 211.

Les procédés précités pour fabriquer des vitrages feuilletés comportant de telles couches intercalaires molles sont relativement fastidieux. Dans les procédés connus, la couche intercalaire peut n'être formée que lorsqu'au moins une des feuilles entrant dans la composition du vitrage feuilleté est présente dans ses dimensions finales et détermine alors comme telle la configuration, l'appui et la résistance mécanique de la couche intermédiaire molle.

L'invention à pour but de simplifier la fabrication de telles vitrages feuilletés comportant des couches intercalaires très molles, de procurer une couche intercalaire qui conserve sa forme et permette la fabrication de vitrage feuilletés selon un procédé industriel.

Conformément à l'invention la couche intercalaire faite d'une matière plastique très molle à résistance mécanique faible est unie au moins d'un côté à une pellicule en une matière plastique à résistance mécanique plus élevée.

Suivant l'invention, la couche intercalaire très molle fait partie d'une feuille stratifiée dont la résistance mécanique et la rigidité nécessaires pour sa manipulation sont toutes deux assurées par une deuxième couche de matière plastique. La feuille stratifiée peut être fabriquée comme telle et être, le cas échéant, envidée en rouleau et entreposée. Lors de la fabrication du vitrage feuilleté proprement dit, on peut découper des primitifs aux dimensions désirées à partir de cette feuille stratifiée pour les unir aux autres couches individuelles entrant dans la composition des vitrages feuilletés.

La liaison avec les couches adjacentes du vitrage feuilleté peut, par exemple, s'effectuer à l'aide de couches adhésives supplémentaires. Il est toutefois particulièrement avantageux d'utiliser en tant que couche de matière plastique à résistance mécanique accrue une pellicule en une matière thermoplastique qui peut être réunie à la feuille adjacente du vitrage feuilleté au moment de sa fabrication moyennant un apport de chaleur et de pression. Il est particulièrement avantageux que l'autre surface de la couche très molle soit aussi recouverte d'une couche ou d'une pellicule en une matière thermoplastique dont l'adhésivité se développe également moyennant un apport de pression et de chaleur. Dans ce cas, la feuille stratifiée est faite d'une couche interne de la matière plastique très molle et de deux couches de recouvrement ou de parement de pellicule adhésive en matière thermoplastique et peut être jointe, sous cette forme, aux autres feuilles du vitrage feuilleté, selon les procédés connus et courants pour la fabrication des vitrages de sécurité feuilletés. Ces vitrages feuilletés conviennent, entre autres, en particulier, comme vitrages insonorisants dans lesquels la couche très molle à, en particulier, comme fonction d'absorber les sons, et comme vitrages anti-effraction ou pare-balles.

Si la feuille stratifiée conforme à l'invention doit être réunie des deux côtés à une feuille de verre de silicate, les couches de parement en matière plastique de la feuille stratifiée sont, de préférence, des pellicules de polyvinylbutyral. Lorsque la feuille stratifiée doit être réunie d'un côté à une feuille de matière plastique, par exemple à une feuille transparente de polycarbonate, au moins la couche de parement thermoplastique prévue pour venir à son contact est faite d'une couche de préférence en un polyuréthane thermoplastique. Des compositions de verre telles que décrites dans le document DE PS 26 60 346 se sont avérées particulièrement efficaces à cet effet. Lors de la liaison d'une feuille de verre de silicate avec une feuille de matière plastique, la couche molle de la pellicule stratifiée a pour rôle d'égaliser les dilatations, ce qui est nécessaire à cause des coefficients de dilatation généralement très différents du verre de silicate et de la matière plastique et ceci afin d'éviter un décollement des éléments du vitrage feuilleté ou encore une courbure de celui-ci sous l'influence de la température.

La couche de matière plastique très molle de la feuille stratifiée est avantageusement faite à partir d'un mélange réactionnel d'un composant polyol polyfonctionnel et d'un composant isocyanate polyfonctionnel, de préférence au moins un des composants ayant une fonctionalité égale à 3, un excès important du composant polyol par rapport à la quantité stoechiométrique nécessaire pour former le polyuréthane étant prévu, le rapport numérique des groupes isocyanates aux groupes hydroxyles dans le mélange des deux constituants est compris entre 0,2 et 0;6. Diverses compositions pour cette couche intercalaire sont décrites dans la publication de brevet européen 0 026 123.

De préférence, on utilise pour former la couche intercalaire molle un mélange réactionnel dans lequel le rapport numérique des groupes isocyanates sur les groupes hydroxyles est compris entre 0,25 et 0,45, ce qui donne un produit mûri ayant un degré de réticulation compris entre 25 et 45 %.

Comme composant polyol plurifonctionnel, on emploie seul ou en mélange, en particulier des polyesterpolyols ou des polyétherpolyols ayant une masse moléculaire comprise entre 250 et 4000 obtenus par réaction d'eau ou d'alcool plurifonctionnels comme l'éthylèneglycol, le butanol-1,4, la glycérine, le triméthylolpropane, l'hexanetriol, le pentaérithritol, le sorbitol, etc... avec des acides dicarboxyliques aliphatiques comme l'acide adipique ou des éthers cycliques comme l'oxyde d'éthylène, l'oxyde de propylène ou le tétrahydrofurane. Comme composant isocyanate, on emploie seul ou en mélange des isocyanates plurifonctionnels comme l'hexaméthylènediisocyanate, le triméthylhexaméthylènediisocyanate, le m-xylylènediisocyanate, le 4,4'-méthylène-bis (cyclohexylisocyanate), l'isophoronediisocyanate ou leur biuret à trois fonctions isocyanates ou plus, des isocyanurates ou des substances analogues.

Le mélange réactionnel préféré est un mélange de 75,5 à 70,3 % en poids de polyétherpolyols obtenus par condensation de 1,2-propylèneoxyde avec du 2,2-bis(hydroxyméthyl-1-butanol) ou du 1,2,3-trihydroxypropane, ayant une masse moléculaire d'environ 450 et une teneur en radicaux OH libres d'environ 10,5 à 12 % et 24,5 à 29,7 % en poids d'un biuret de 1,6-hexanediisocyanate ayant une teneur en radicaux NCO libres d'environ 21 à 24 %.

D'autres avantages et caractéristiques de l'invention ressortiront de la description suivante de divers exemples de réalisation pour la fabrication de feuilles stratifiées conformes à l'invention et des vitrages feuilletés utilisant de telles feuilles stratifiées.

Aux dessins annexés :

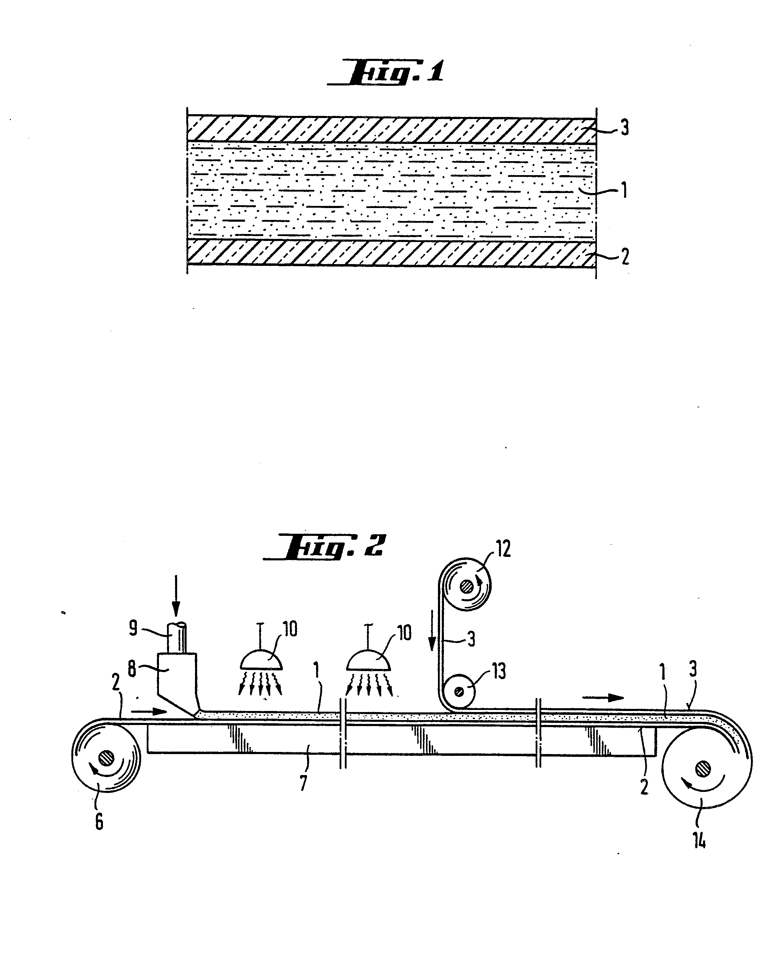

. la figure 1 est une vue en coupe transversale de la structure fondamentale d'une feuille stratifiée à trois couches conforme à l'invention ;

. la figure 2 est une représentation schématique d'un premier procédé de fabrication d'une pellicule à trois couches conformes à l'invention, et

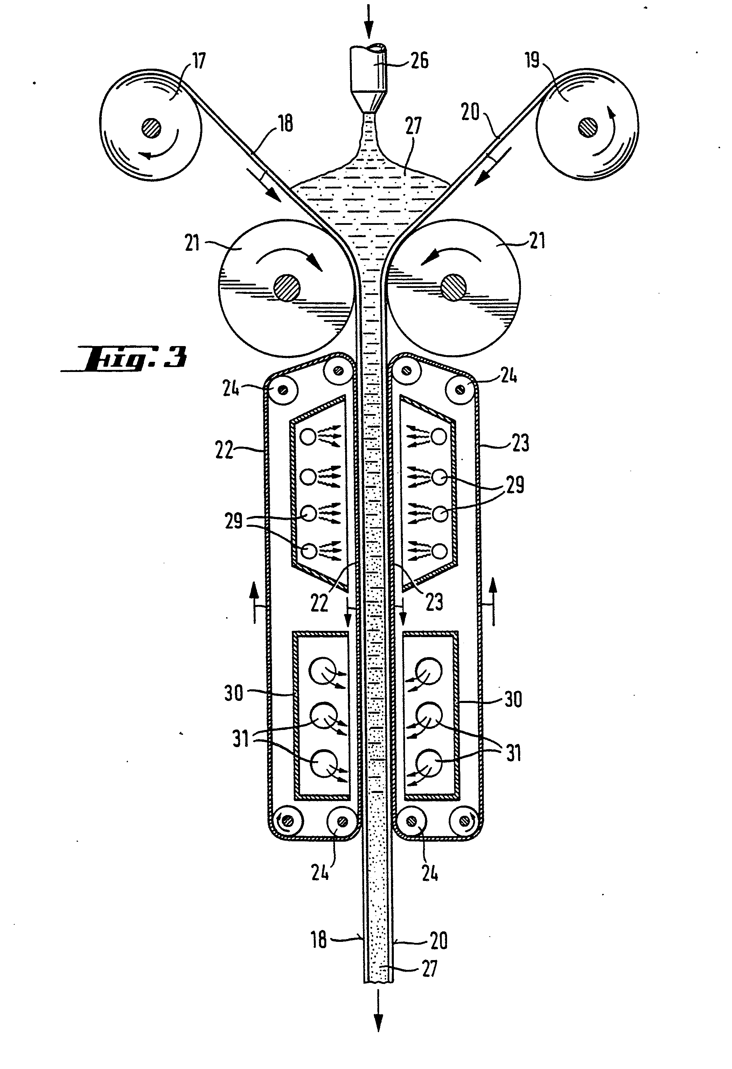

. la figure 3 est une représentation d'un autre procédé pour la fabrication d'une pellicule stratifiée à trois couches.

La pellicule stratifiée à trois couches représentée comprend une couche interne 1 en une matière très molle et très adhérente, et une couche de parement inférieure 2 ainsi qu'une couche de parement supérieure 3. La couche interne 1 a une épaisseur d'environ 2 mm et les couches de parement 2 et 3 ont une épaisseur par exemple d'environ 0,4 mm. Les couches de parement 2 et 3 sont faites d'une matière plastique thermoplastique. Lorsque la feuille stratifiée doit être disposée entre deux feuilles de verre de silicate, les deux couches de parement 2, 3 sont, de préférence, des pellicules de polyvinylbutyral telles que celles utilisées habituellement pour la fabrication des vitrages feuilletés.

La fabrication d'une telle feuille stratifiée peut s'effectuer de la manière représentée schématiquement sur la figure 2. La pellicule formant la couche de parement inférieure 2 en polyvinylbutyral est dévidée d'un rouleau d'alimentation 6 et est amenée sur une table 7 comportant une surface plane qui soutient la pellicule 2. Au-dessus de la table 7 se trouve une tête de coulée 8 au moyen de laquelle la composition à couler formant la couche interne 1 est coulée en une couche de l'épaisseur souhaitée sur la pellicule 2. La composition de coulée s'unit solidement et de manière durable à la pellicule 2. Derrière la tête de coulée 8, dans laquelle la composition de coulée est introduite par les conduits d'amenée 9, est prévue une distance de séchage dans laquelle des dispositifs de chauffage par rayonnement 10 ou d'autres dispositifs de chauffage par convection portent la couche 1 une température à laquelle la polymérisation du mélange réactionnel s'accélère. Avant la fin de la réaction de polymérisation, la pellicule de parement supérieure 3, également en polyvinylbutyral, est dévidée d'un rouleau d'alimentation 12 et est appliquée au moyen d'un rouleau applicateur 13 sur la couche molle 1. La feuille stratifiée obtenue est refroidie au point que les couches de parement perdent leur adhésivité et que la feuille stratifiée puisse être manipulée. Elle est alors envidée sur le rouleau d'alimentation 14. La feuille stratifiée peut être entreposée, expédiée et travaillée comme des pellicules en polyvinylbutyral.

La composition qui est coulée sur la pellicule 2 à l'aide de la tête de coulée 8 est faite d'un mélange réactionnel homogène dépourvu de bulles d'air et comprenant :

- 1 850 parties d'un polyéther-polyol obtenu par condensation de l'oxyde de 1,2-propylène avec du 2,2-bis-(hydroxyméthyl-1-butanol) ayant une masse moléculaire d'environ 450 et une teneur en groupes OH libres d'environ 11,5 % (par exemple, le produit de la société BAYER AG connu sous la dénomination commerciale DESMOPHEN 550 U).

- 0,19 partie de dilaurate de dibutylétain, et

- 716 parties d'un biuret de 1,6-hexanediisocyanate ayant une teneur en groupes NCO libres d'environ 22 % (par exemple le produit commercialisé par la société BAYER AG sous l'appellation DESMODUR N/100).

Lorsque la couche 1 formée à partir de ce mélange réactionnel a complètement réagi, elle présente, en correspondance avec le rapport équivalent des groupes isocyanate aux groupes hydroxyle, un degré de réticulation d'environ 30 %. La dureté Shore A de cette couche 1 ne dépasse pas 20. La couche 1 seule ne présente pratiquement aucune résistance à la traction. Elle est en outre extrêmement molle et adhérente, de sorte que cete matière seule n'est pas manipulable sous forme de feuilles.

Un autre procédé de fabrication d'une feuille stratifiée conforme à l'invention est illustré schématiquement sur la figure 3. Dans ce cas, une pellicule 18 en polyvinylbutyral est dévidée d'un rouleau d'alimentation 18 et une pellicule 20, également en polyvinylbutyral est dévidée d'un rouleau d'alimentation 19. Les deux bandes de pellicule 18, 20 sont déviées pour être orientées verticalement, le cas échéant par des rouleaux déflecteurs 21 pouvant être chauffés, et passent ensuite entre deux bandes sans fin 22, 23 qui peuvent être, par exemple, de minces bandes d'acier. Les bandes sans fin 22, 23 passent sur des rouleaux de renvoi 24 dont l'un est chaque fois entraîné. Les deux bandes de pellicule 18, 20 défilent de cette façon à une distance réciproque constante et à une vitesse uniforme sur une distance de réaction dans laquelle la matière coulée 27 présente entre les deux bandes de pellicule 18, 20 réagit.

Au dessus des rouleaux déflecteurs 21, les bandes de pellicule 18, 20 forment un espace en forme d'entonnoir dans lequel la matière à couler 27 provenant de l'ajutage d'alimentation 26 est introduite de manière à remplir l'espace prévu entre ces deux bandes de pellicule 18, 20. Dans la distance de réaction sur laquelle les bandes de pellicule 18, 20 sont supportées et transportées par les bandes sans fin 22, 23, le produit stratifié formé des deux bandes de pellicule 18, 20 et de la couche intermédiaire fluide 27 traverse tout d'abord une zone de chauffage dans laquelle les dispositifs de chauffage par rayonnement 22, 23 sont installés et agissent sur les bandes sans fin 22, 23. La matière coulée, par exemple le mélange réactionnel à plusieurs constituants, réagit dans cette zone réactionnelle chauffée. Le produit stratifié traverse ensuite une zone de refroidissement dans laquelle sont disposés des caissons de refroidissement 30 dans lesquels de l'air froid est introduit par des conduits d'alimentations 31. L'air froid s'écoule sur les bandes sans fin 22, 23 qui, de cette façon, sont refroidies et qui pour leur part extraient tellement de chaleur du produit stratifié qu'il peut être envidé sur un rouleau d'alimentation.

A titre de mélanges pour la matière à couler, on peut utiliser les compositions qui ont été décrites précédemment.

Lorsque la feuille stratifiée doit également se prêter à un collage à une feuille de matière plastique, par exemple en polycarbonate, il est à conseiller de choisir au moins une pellicule de parement en une matière thermoplastique qui convienne, en particulier pour le collage à du polycarbonate. A cet effet, on peut utiliser, en particulier, par exemple des pellicules à base de polyuréthane notamment des polyuréthanes-polyurées décrites dans la publication de brevet français 2 366 321. De telles pellicules ont également des propriétés thermoplastiques.

REVENDICATIONS

1. Feuille intercalaire pour un vitrage feuilleté en verre, en verre et en matière plastique ou en matière plastique, caractérisée en ce qu'elle comprend une couche d'une matière plastique très molle à résistance mécanique propre peu élevée et au moins une couche d'une matière plastique à résistance mécanique plus élevée.

2. Feuille intercalaire selon la revendication 1, caractérisée en ce que la couche faite d'une matière plastique à résistance mécanique plus élevée présente des propriétés thermoplastiques.

3. Feuille intercalaire selon une des revendications 1 ou 2, caractérisée en ce que la couche à résistance mécanique plus élevée est une pellicule de polyvinylbutyral préfabriquée.

4. Feuille intercalaire selon une des revendications 1 à 3, caractérisée en ce que la couche faite d'une matière plastique très molle à résistance mécanique propre faible est unie des deux côtés à une couche de parement en une matière plastique thermoplastique.

5. Feuille intercalaire selon une des revendications 1 à 4, caractérisée en ce qu'au moins une des couches de parement est faite d'une polyuréthane-polyurée thermoplastique.

6. Feuille intercalaire selon une des revendications 1 à 5, caractérisée en ce que la couche en matière plastique très molle est le produit de réaction d'un composant polyol polyfontionnel et d'un composant isocyanate polyfonctionnel, avec un excès important du composant polyol par rapport à la quantité stoechiométrique nécessaire pour la formation du polyuréthane, le rapport numérique des groupes isocyanate aux groupes hydroxyle dans le mélange des deux composants étant compris entre 0,2 et 0,6.

7. Feuille intercalaire selon la revendication 6, caractérisée en ce que le composant polyol est formé d'un ou de plusieurs polyols polyfonctionnels, en particulier de polyester-polyols ou de polyéther-polyols d'un poids moléculaire moyen compris entre 250 et 4000.

8. Feuille intercalaire selon une des revendications 6 et 7, caractérisée en ce que le composant isocyanate est formé d'un ou de plusieurs isocyanates polyfonctionnels, comme l'hexaméthylènediisocyanate, le triméthylhexaméthylènediisocyanate, le m-xylylènediisocyanate, le 4,4'-méthylène-bis(cyclohexylisocyanate), l'isophoronediisocyanate ou leur biuret à trois fonctions isocyanates ou plus, des isocyanurates ou des substances analogues.

9. Couche intermédiaire suivant les revendications 6 à 8, caractérisée en ce que la couche en matière plastique très molle est le produit de réaction d'un mélange de 75,5 à 70,3 % en poids de polyétherpolyols préparé par condensation de l'oxyde de 1,2-propylène avec du 2,2-bis(hydroxyméthyl-1-butanol) ou du 1,2,3-trihydroxypropane d'un poids moléculaire d'environ 450 et une teneur en groupes hydroxyles libres de 8,5 à 12 %, et de 24,5 à 29,7 % en poids d'un biuret issu de 1,6-hexaméthylènediisocyanate d'une teneur en groupe NCO libres de 21 à 24 %.

10. Procédé pour fabriquer une feuille intercalaire selon une des revendications 1 à 9, caractérisé en ce qu'on coule un mélange réactionnel formant la couche de matière plastique très molle en une couche d'épaisseur uniforme sur une pellicule de support en une matière, de préférence thermoplastique, à résistance mécanique plus élevée, la couche coulée polymérisant ou réagissant sur cette pellicule de support.

11. Procédé de fabrication d'une feuille intercalaire selon la revendication 10, caractérisé en ce qu'on applique une pellicule en une matière, de préférence thermoplastique, comme du polyvinylbutyral ou un polyuréthane thermoplastique sur le mélange réactionnel coulé ou sur la couche du mélange réactionnel qui a complètement ou partiellement réagi.

12. Procédé de fabrication d'une feuille intercalaire selon une des revendications 1 à 9, caractérisé en ce qu'on coule le mélange réactionnel apte à former une couche de matière plastique très molle, entre deux pellicules en une matière plastique à résistance mécanique plus élevée maintenues à une distance constante l'une de l'autre entre lesquelles le mélange réactionnel polymérise ou réagit.

13. Application d'une feuille intercalaire selon une des revendications 1 à 12 pour la fabrication de vitrages feuilletés insonorisants.

14. Application d'une feuille intercalaire selon une des revendications 1 à 12 pour la fabrication de vitrages feuilletés pare-b-lles.

15. Application d'une feuille intercalaire selon une des revendications 1 à 12 pour la fabrication de vitrages anti-effraction.

**Fig. 1**

**Fig. 2**

_Fig. 3_